Europäisches Patentamt

European Patent Office

Office européen des brevets

(11) Numéro de publication : **0 345 143 B1**

(12) **FASCICULE DE BREVET EUROPEEN**

(45) Date de publication du fascicule du brevet :
**09.09.92 Bulletin 92/37**

(51) Int. Cl.⁵ : **E02D 19/16, C04B 28/26,
// (C04B28/26, 14:06, 14:10)**

(21) Numéro de dépôt : **89401467.9**

(22) Date de dépôt : **30.05.89**

(54) **Procédé de réalisation dans le sol d'une coupure d'étanchéité résistant aux acides et béton utile à cet effet.**

(30) Priorité : **31.05.88 FR 8807206**

(43) Date de publication de la demande :
**06.12.89 Bulletin 89/49**

(45) Mention de la délivrance du brevet :
**09.09.92 Bulletin 92/37**

(84) Etats contractants désignés :
**AT BE CH DE ES FR GB GR IT LI LU NL SE**

(56) Documents cités :
**FR-A- 1 336 090
GB-A- 1 106 955
GB-A- 1 218 203
NL-A- 82 013**

(73) Titulaire : **SONDAGES INJECTIONS FORAGES
"S.I.F." ENTREPRISE BACHY
Les Colonnades -Bat B, 4 rue Sainte-Claire
Deville
F-92563 Rueil-Malmaison Cedex (FR)**

(72) Inventeur : **Delmas, Francis Marcel Louis
19 avenue de Choisy
F-75643 Paris Cédex 13 (FR)**
Inventeur : **Gandais, Michel Auguste Georges
36 rue d'Estrelles Saint Sauveur sur Ecole
F-77930 Perther (FR)**

(74) Mandataire : **Colas, Jean-Pierre et al
Cabinet de Boisse 37, avenue Franklin D.
Roosevelt
F-75008 Paris (FR)**

EP 0 345 143 B1

## Description

La technique des coupures d'étanchéité réalisées dans le sol sous forme de parois moulées est très fréquemment mise en oeuvre dans les ouvrages hydrauliques (coupure de l'écoulement des eaux souterraines avec possibilité de créer un réservoir amont ou de constituer une zone asséchée hors d'eau à l'aval, étanchement de digues de canalisation d'écoulements, séparation d'eau de salinités différentes, etc....).

Les coupures ou parois d'étanchéité moulées dans le sol sont réalisées en effectuant une tranchée à l'aide d'un outillage qui procède à une extraction de terrain, et en remplaçant le terrain extrait par un matériau destiné à assurer l'étanchéité. Elles peuvent également, lorsque le terrain présente une faible cohésion et qu'il s'agit de réaliser une paroi d'étanchéité de modeste profondeur, etre réalisées en effectuant une succession d'empreintes à l'aide d'un outil foncé dans le sol, et en remplissant ces empreintes d'un matériau du type coulis ou mortier assurant l'étanchéité de la barrière ainsi créée, au moment de l'extraction de l'outil.

Des coupures d'étanchéité sont également utilisées dans le domaine de la protection de l'environnement pour éviter que des eaux polluées par des effluents nocifs ne viennent contaminer des zones préservées. Les effluents nocifs sont générés principalement par des activités industrielles qui rejettent de façon accidentelle ou pas des effluents chimiques dans les nappes phréatiques ou dans les eaux de surface. Lors de la constitution d'une coupure d'étanchéité destinée à préserver des zones non affectées de la contamination provoquée par des effluents pollués, se pose le problème de la pérennité du matériau constitutif de la coupure face à la variété des produits chimiques susceptibles d'être présents dans les effluents.

Dans les travaux classiques faisant partie des ouvrages hydrauliques, les matériaux étanches constitutifs des parois sont très généralement constitués par des coulis, des mortiers ou des bétons d'étanchéité. Les coulis sont préparés à base d'argile, plus particulièrement de bentonite, d'un liant hydraulique qui est généralement un ciment, et, éventuellement, d'une charge qui peut être inerte ou éventuellement réactive. Les mortiers et bétons comportent les mêmes types de matériaux que les coulis mais ils présentent, en plus, une quantité importante de granulats qui constitueront un squelette granulaire. Dans les mortiers, les granulats sont limités aux matériaux sableux alors que, dans les bétons, les granulats comportent des graviers en plus du matériau sableux.

Lorsque ces matériaux sont destinés à la constitution d'écrans destinés à retenir des eaux à caractère acide, la présence de ciment hydraulique (qu'il s'agisse de ciments du type Portland ou de ciments à base de laitier qui sont les types les plus communément utilisés) constitue un point d'inquiétude en ce qui concerne la pérennité de l'étanchéité de la paroi.

Si on caractérisé l'acidité de l'eau susceptible de percoler à travers la paroi d'étanchéité par la valeur de son pH, il est admis que pour des valeurs de pH de 7 à environ 5,5 les eaux sont considérées comme légèrement agressives à l'égard des ciments alors que pour des valeurs inférieures, les eaux passent d'un caractère fortement agressif à très fortement agressif à mesure que leur pH s'abaisse.

De telles eaux se rencontrent parfois dans le sous-sol et l'exécution de parois d'étanchéité pérenne dans un milieu de pH inférieur à 5,5 ne tolère pas l'incorporation de ciment hydraulique classique qui serait détruit à terme par l'acidité des eaux de percolation détériorant ainsi les caractéristiques mécaniques et les caractéristiques d'étanchéité prévues.

Une méthode pour diminuer le risque de détérioration du liant ciment par les eaux acides consiste à éliminer le problème en supprimant l'utilisation du ciment. Dans ce cas, les coulis habituellement composés d'eau, d'argile et/ou bentonite et de ciment ne sont plus envisageables, car, sans ciment, ces coulis ne sont qu'une boue sans cohésion et sans stabilité. Les matériaux de remplissage des coupures étanches sont alors composés de mortiers ou de béton d'étanchéité, qui eux comportent un squelette granulaire assurant la pérennité volumique du matériau. L'étanchéité est assurée par l'argile, et plus particulièrement par la bentonite, qui remplit les interstices compris entre les grains du squelette granulaire.

Le squelette granulaire présente des caractéristiques de répartition granulométrique telle qu'il soit autofiltrant et que, notamment, le matériau argileux ne risque pas d'être entraîné par le courant de percolation. Cette caractéristique est obtenue par la présence, de façon naturelle ou ajoutée, en quantité appropriée, de matériaux fins de granulométrie comprise entre 0,002 mm et 0,1 mm.

Cette méthode présente un certain intérêt pour éviter une destruction à court terme de l'étanchéité contre la percolation d'eaux acides agressives, mais n'est pas satisfaisante à long terme car la perméabilité aux eaux acides agressives croît avec le temps. Elle est, de toute manière, inadaptée lorsque les eaux acides sont très agressives.

Un essai accéléré en laboratoire le met en évidence:

un béton d'étanchéité de composition pondérale :

```
- gravier siliceux (5-8 mm)         =  311 kg
- sable siliceux (< 5 mm)           = 1240 kg
- fines siliceuses (0,002-0,1 mm)   =  449 kg
- bentonite                         =   40 kg
- eau                               =  386 kg
```

est placé dans une cellule pour essai de perméabilité et soumis à un gradient de percolation (rapport de la pression d'eau exprimé en cm d'eau à l'épaisseur, exprimé en cm, de la couche de béton d'étanchéité testée) de 330 avec une eau dont le pH est amené à la valeur 0 par addition d'acide sulfurique. La valeur initiale du coefficient de perméabilité qui est de $2 \times 10^{-9}$ m/s reste stable pendant 6 minutes, puis augmente rapidement pour atteindre la valeur de $10^{-8}$ m/s au bout de 15 minutes d'essai de percolation, et continue de croître par la suite.

Par ailleurs, GB-A-1.106.955 décrit un procédé pour compacter et rigidifier un terrain particulaire qui consiste à mélanger ledit terrain avec un mélange durcissable à base d'argile, d'une solution de verre soluble et d'un carbonate de sodium ou de potassium, de façon à lier les particules du terrain avec formation d'une masse solide.

Il existe donc un besoin pour un procédé permettant de réaliser des parois d'étanchéité résistant de façon durable aux eaux acides fortement agressives à très fortement agressives.

L'invention vise à satisfaire ce besoin, pour lequel aucune solution satisfaisante n'existe à ce jour.

Plus particulièrement, l'invention concerne un procédé de réalisation d'une coupure d'étanchéité dans le sol devant être en contact d'une eau acide présentant un pH Inférieur à 5,5, selon lequel on creuse une tranchée dans le sol et on remplit la tranchée effectuée avec un béton d'étanchéité comprenant de l'eau, une argile et un granulat, résistant aux acides, à propriétés auto-filtrantes, caractérisé en ce que le béton d'étanchéité contient, en outre, une solution aqueuse de silicate de sodium et/ou de potassium et est dépourvu de toute matière acide ou génératrice d'acide susceptible de former avec le silicate un gel solide d'acide silicique, la proportion de silicate de sodium et/ou de potassium, calculée sous forme de $SiO_2$, incorporée dans le béton d'étanchéité, étant comprise entre 5 et 70 kg par mètre-cube de béton de façon à donner lieu à la formation d'une barrière locale, étanche, de gel solide d'acide silicique lorsque la paroi d'étanchéité est localement soumise à la percolation d'eau acide provenant du sol environnant, les régions avoisinantes de ladite barrière étanche demeurant dans un état non gélifié.

Le procédé de l'invention convient pour la réalisation de coupures d'étanchéité résistant à toutes sortes d'acides, sauf ceux attaquant la silice dans les conditions régnant au voisinage de la coupure. Des exemples d'acides courant pour lesquels la coupure d'étanchéité est efficace sont l'acide chlorhydrique, l'acide sulfurique, l'acide nitrique, l'acide phosphorique, l'acide acétique, etc.. Par contre, le procédé de l'invention ne convient pas pour l'acide fluorhydrique qui attaque la silice.

L'invention concerne également un béton d'étanchéité, qui est utile pour la mise en oeuvre du procédé sus-défini. Ce béton comprend de l'eau, une argile, un aranulat, résistant aux acides, à propriétés auto-filtrantes et se caractérisé par la présence d'une solution aqueuse de silicate de sodium et/ou de potassium en une quantité correspondant à 5 à 70 kg de $SiO_2$ par mètre-cube de béton et par l'absence de toute matière acide ou génératrice d'acide susceptible de former avec le silicate un gel solide d'acide silicique.

L'argile peut être une argile ordinaire quelconque. On préfère, toutefois, utiliser de la bentonite, telle que de la bentonite sodique ou calcique.

Le granulat résistant aux acides doit présenter des propriétés auto-filtrantes. Un granulat auto-filtrant est un granulat dont une fraction notable de son poids est constituée de fines particules réparties sur l'intervalle granulométrique allant de 2 à 100 μm, de manière que ces fines particules viennent remplir dans le béton les vides existant entre les autres particules, de taille supérieure, du granulat. Un exemple de granulat auto-filtrant est un granulat dont 10 à 30% en poids des particules sont comprises dans la gamme de 2 à 100 μm. Les autres particules du granulat peuvent avoir une taille s'étageant de 100 μm à plusieurs millimètres ou même dizaines de millimètres. Comme granulat résistant aux acides, on préfère utiliser un granulat siliceux.

Les silicates de sodium et/ou de potassium sont des matières disponibles dans le commerce. Ils sont habituellement commercialisés sous forme de solutions aqueuses d'une concentration de 20 à 30% en poids. Les silicates de sodium du commerce ont habituellement un rapport Rp ($SiO_2/Na_2O$) compris entre 2 et 4, mais tout autre rapport pourrait convenir aux fins de l'invention. On préfère, toutefois, employer un silicate de sodium ayant un rapport Rp relativement élevé, supérieur à 3. De leur côté, les silicates de potassium du commerce présentent habituellement un rapport Rp($SiO_2/K_2O$) compris entre 1,4 et 2,5, mais tout autre rapport pourrait convenir.

Le silicate de sodium convient particulièrement dans le cas où l'acide devant venir au contact de la coupure d'étanchéité est l'acide nitrique ou l'acide chlorhydrique. Le silicate de potassium convient particulièrement dans le cas où l'acide devant venir au contact de la coupure d'étanchéité est l'acide sulfurique, l'acide acétique, ou l'acide phosphorique.

Le silicate ajouté initialement exerce deux actions bénéfiques. Premièrement, il fluidifie la suspension de bentonite, ce qui permet d'incorporer des quantités importantes de bentonite dans le béton d'étanchéité tout en conservant une maniabilité acceptable et, deuxièmement, il abaisse le coefficient de perméabilité initial du béton. Par la suite, lorsque le béton est coulé dans la tranchée pour réaliser la coupure d'étanchéité et lorsque cette coupure est soumise, à certains endroits, à la percolation d'eau acide, le silicate ajouté donne lieu, aux endroits en question, à la formation d'une barrière étanche, résistant aux acides, de gel solide d'acide polysilicique, par suite du fait que l'acide vient neutraliser la soude ou la potasse.

Il y a lieu de noter que la réaction du silicate avec l'acide contenu dans l'eau percolante ne se produit que localement aux endroits où se produit effectivement une percolation d'eau acide. Ceci permet aux régions avoisinantes de la coupure d'étanchéité, qui demeurent dans un état non gélifié, de venir compenser les retraits locaux dus à la gélification et d'assurer la continuité de l'ouvrage. Si on provoquait la gélification de l'ensemble de la coupure d'étanchéité au moment de sa réalisation, en incorporant au béton d'étanchéité une matière génératrice d'acide, comme cela est bien connu dans le domaine des compositions durcissables à base de silicate de métal alcalin, on n'obtiendrait pas une coupure d'étanchéité satisfaisante. Une gélification globale donnerait lieu, en effet, à la formation de fissures par suite du phénomène de retrait lié à la gélification. A titre indication, on donne ci-après la composition de bétons d'étanchéité préférés selon l'invention:

```
- granulat siliceux (sable et gravier)     1200 à 1800 Kg
  dont 10 à 30% en poids sont formés de
  fines particules réparties dans l'in-
  tervalle de 2 à 100 µ m
- bentonite sodique ou calcique, ou autre
  argile                                      15 à   150 kg
- silicate de sodium et/ou de potas-
  sium (calculé sous forme de SiO2)            5 à    70 kg
- eau ................. pour faire     1 m3 de béton.
```

L'exemple non limitatif suivant, qui rapporte un essai fait au laboratoire, illustre bien l'effet avantageux procuré par la présente invention.

## EXEMPLE

Un béton d'étanchéité ayant la composition suivante (pour 1m³ de béton) :

```
- granulat siliceux                           1720 kg
  dont (gravier siliceux (5-8 mm) : 270 kg
       (sable siliceux (< 5 mm )  :1060 kg
       (fines siliceuses (2-100µm):390 kg
- bentonite                                     35 kg
- silicate de Na (Rp = 3,2) sous forme
  d'une solution aqueuse à 28,5% en poids      40litres
                                         (11,4 kg de SiO2)
- eau                                          300 litres
```

est placé dans une cellule pour essai de perméabilité et soumis à un gradient de percolation de 330. Lorsque l'essai est réalisé avec de l'eau douce, le coefficient de perméabilité du béton est égal à $2,7 \times 10^{-9}$ m/s de façon constante. Lorsque l'essai est réalisé avec de l'eau dont le pH est abaissé à la valeur O par addition d'acide sulfurique, le coefficient de perméabilité initial reste constant à la valeur de $2,8 \times 10^{-9}$ m/s pendant 100 minutes, puis décroît subitement pour atteindre une valeur régulière inférieure à $1 \times 10^{-10}$ m/s.

**Revendications**

1. Un procédé de réalisation d'une coupure d'étanchéité dans le sol devant être en contact d'une eau acide présentant un pH inférieur à 5,5, selon lequel on creuse une tranchée dans le sol et on remplit la tranchée effectuée avec un béton d'étanchéité comprenant de l'eau, une argile et un granulat, résistant aux acides, à propriétés auto-filtrantes, caractérisé en ce que le béton d'étanchéité contient, en outre, une solution aqueuse de silicate de sodium et/ou de potassium et est dépourvu de toute matière acide ou génératrice d'acide susceptible de former avec le silicate un gel solide d'acide silicique, la proportion de silicate de sodium et/ou de potassium, calculée sous forme de $SiO_2$, incorporée dans le béton d'étanchéité, étant comprise entre 5 et 70 kg par mètre-cube de béton de façon à donner lieu à la formation d'une barrière locale, étanche, de gel solide d'acide silicique lorsque la paroi d'étanchéité est localement soumise à la percolation d'eau acide provenant du sol environnant, les régions avoisinantes de ladite barrière étanche demeurant dans un état non gélifié.

2. Un procédé selon la revendication 1, caractérisé en ce que l'argile est de la bentonite.

3. Un procédé selon la revendication 1 ou 2, caractérisé en ce que le granulat est siliceux.

4. Un procédé selon l'une quelconque des revendications 1 à 3, caractérisé en ce que 10 à 30 % du poids du granulat sont formés de fines particules réparties sur l'intervalle granulométrique allant de 2 à 100 μm.

5. Un procédé selon la revendication 1, caractérisé en ce qu'on utilise un béton d'étanchéité ayant la composition suivante :

```
- granulat siliceux                      1200 à 1800 kg
    dont 10-30 % en poids sont formés
    de fines particules d'une grosseur
  allant de 2 à 100 μm

- bentonite ou autre argile              15 à 150 kg
- silicate de Na et/ou de K               5 à  70 kg
      (calculé en SiO₂)
- eau .............. pour faire         1 m³ de béton.
```

6. Un béton d'étanchéité pour la mise en oeuvre du procédé selon la revendication 1, comprenant de l'eau, une argile, un granulat résistant aux acides à propriétés auto-filtrantes, caractérisé en ce qu'il comprend, en outre, une solution aqueuse de silicate de sodium et/ou de potassium en une quantité correspondant à 5 à 70 kg de $SiO_2$ par mètre-cube de béton, et est dépourvu de toute matière acide ou génératrice d'acide susceptible de former avec le silicate un gel solide d'acide silicique.

7. Un béton d'étanchéité selon la revendication 6, caractérisé en ce que l'argile est de la bentonite.

8. Un béton d'étanchéité selon la revendication 6 ou 7, caractérisé en ce que le granulat est siliceux.

9. Un béton d'étanchéité selon l'une quelconque des revendications 6 à 8, caractérisé en ce que 10 à 30 % du poids du granulat sont formés de fines particules réparties sur l'intervalle granulométrique allant de 2 à 100 μm.

10. Un béton selon la revendication 1, caractérisé en ce qu'il a la composition suivante :

```
- granulat siliceux                        1200 à 1800 kg
    dont 10-30 % en poids sont formés de
    fines particules d'une grosseur
    allant de 2 à 100 µm
- bentonite ou autre argile                  15 à 150 kg
- silicate de Na et/ou de K                   5 à  70 kg
        (calculé en SiO₂)
- eau ..................pour faire     1 m³ de béton.
```

**Patentansprüche**

1. Verfahren zur Herstellung eines Abdichtungsschnittes im Boden, der in Kontakt mit saurem Wasser mit einem pH unter 5,5 stehen soll, wobei ein Graben im Boden ausgehoben und der entstandene Graben mit Abdichtbeton verfüllt wird, der Wasser, einen Ton und ein säurefestes Granulat mit Eigenfiltereigenschaften umfaßt, dadurch gekennzeichnet, daß der Abdichtbeton außerdem eine wäßrige Lösung von Natrium- und/oder Kaliumsilicat enthält und keinerlei saure oder säurebildende Stoffe aufweist, die mit dem Silicat ein festes Kieselsäure-Gel bilden können, wobei der in den Abdichtbeton eingebrachte Anteil an Natrium- und/oder Kaliumsilicat, berechnet als $SiO_2$, zwischen 5 und 70 kg pro m³ Beton beträgt, so daß sich eine örtliche, dichte Barriere aus festem Kieselsäure-Gel bilden kann, wenn die Abdichtwand örtlich durchsickerndem sauren Wasser aus dem umgebenden Boden ausgesetzt wird, wobei die der dichten Barriere benachbarten Bereiche in ungeliertem Zustand bleiden.

2. Verfahren nach Anspruch 1, dadurch gekennzeichnet, daß der Ton Bentonit ist.

3. Verfahren nach Anspruch 1 oder 2, dadurch gekennzeichnet, daß das Granulat ist kieselartig.

4. Verfahren nach irgendeinem der Ansprüche 1 bis 3, dadurch gekennzeichnet, daß 10 bis 30 Gew.-% des Granulats aus feinen Teilchen gebildet sind, die eine Korngrößen-verteilung im Bereich von 2 bis 100 µm aufweisen.

5. Verfahren nach Anspruch 1, dadurch gekennzeichnet, daß ein Abdichtbeton mit folgender Zuzammensetzung verwendet wird:

```
-    kieselartig Granulat              1200 bis 1800 kg
     zu 10-30 Gew.-% aus feinen
     Teilchen mit einer Größe
     von 2 bis 100 µm
-    Bentonit oder anderer Ton          15 bis  150 kg
-    Na- und/oder K-silicat              5 bis   70 kg
     (berechnet als SiO₂)
-    Wasser                        auf 1 m³ Beton.
```

6. Abdichbeton zur Verwendung in dem Verfahren nach Anspruch 1, umfassend Wasser, einem Ton und ein säurefestes Granulat mit Eigenfiltereigenschaften, dadurch gekennzeichnet, daß der Abdichbeton außerdem eine wäßrige Lösung von Natrium- und/oder Kaliumsilicat in einer Menge, entsprechend 5 bis 70 kg $SiO_2$ pro m³ Beton enthält, und keinerlei saure oder säurebildende Stoffe aufweist, die mit dem Silicat ein festes Kieselsäure-Gel bilden können.

7. Abdichtbeton nach Anspruch 6, dadurch gekennzeichnet, daß der Ton Bentonit ist.

8. Abdichtbeton nach Anspruch 6 oder 7, dadurch gekennzeichnet, daß das Granulat ist kieselartig.

9. Abdichtbeton nach irgendeinem der Ansprüche 6 bis 8, dadurch gekennzeichnet, daß 10 bis 30 Gew.-% des Granulats aus feinen Teilchen gebildet sind, die eine Korngrößenverteilung im Bereich von 2 bis 100 µm aufweisen.

10. Beton nach Anspruch 1, dadurch gekennzeichnet, daß dieser folgende Zusammensetzung aufweist:

```
—    kieselartig Granulat            1200 bis 1800 kg
     zu 10-30 Gew.-% aus feinen
     Teilchen mit einer Größe
     von 2 bis 100 µm
—    Bentonit oder anderer Ton        15 bis  150 kg
—    Na- und/oder K-silicat            5 bis   70 kg
     (berechnet als SiO₂)
—    Wasser                          auf 1 m³ Beton.
```

## Claims

1. A process for producing a barrier seal in the soil which is to be contacted with an acidic water having a pH below 5.5, in which a trench is excavated in the soil and the trench produced is filled with a sealing concrete comprising water, a clay and an acid-resistant granulate with self-filtering properties, characterized in that said sealing concrete additionally contains an aqueous solution of sodium and/or potassium silicate and is devoid of any acidic or acid-generating matter liable to form a silicic acid gel with the silicate, the proportion of sodium and/or potassium silicate, calculated as $SiO_2$, incorporated in the sealing concrete being between 5 and 70 kg per cubic meter of concrete, so as to give rise to the formation of a leakproof local barrier of a solid gel of polysilicic acid when the sealing wall is locally subjected to the percolation of acidic water originating from the surrounding soil, the surrounding portions of said leakproof barrier remaining in a non-gelled state.

2. A process according to claim 1, characterized in that the clay is bentonite.

3. A process according to claim 1 or 2, characterized in that the granulate is siliceous.

4. A process according to any one of claims 1 to 3, characterized in that 10 to 30 % of the weight of the granulate is made up of fine particles distributed over the particle size range from 2 to 100 µm.

5. A process according to claim 1, characterized in that a sealing concrete which has the following composition is used :

```
- siliceous granulate                    1,200 to 1,800 kg
  in which 10-30% by weight are
  made up of fine particles of a
  size ranging from 2 to 100 µm
- bentonite or other clay                15 to    150 kg
- Na and/or K silicate                    5 to     70 kg
  (calculated as SiO₂ )
- water ........... to make up to 1 m³ of concrete.
```

6. A sealing concrete for carrying out the process of claim 1, comprising water, a clay, an acid-resistant granulate with self-filtering properties, characterized in that it additionally comprises an aqueous solution of sodium and/or potassium silicate, in a quantity corresponding to 5 to 70 kg of $SiO_2$ per cubic meter of concrete, and is devoid of any acidic or acid-generating matter liable to form a solid silicic acid gel with the silicate.

7. A sealing concrete according to claim 6, characterized in that the clay is bentonite.

8. A sealing concrete according to claim 6, characterized in that the granulate is siliceous.

9. A sealing concrete according to claim 6, characterized in that 10 to 30 % of the weight of the granulate is made up of fine particles distributed over the particle size range from 2 to 100 µm.

10. A concrete according to claim 1, characterized in that it has the following composition :

```
- siliceous granulate                    1,200 to 1,800 kg
  in which 10-30 % by wieght are
  made up of fine particles of a
  size ranging from 2 to 100 µm
- bentonite or other clay                15 to    150 kg
- Na and/or K silicate                    5 to     70 kg
  (calculated as SiO₂ )
- water ........... to make up to 1 m³ of concrete.
```